# EUROPEAN PATENT SPECIFICATION

(11) **EP 2 693 521 B1**
(45) Date of publication and mention of the grant of the patent: **06.04.2016**
(21) Application number: 11862652.2
(22) Date of filing: 07.09.2011
(51) Int. Cl.: H01M 2/10, B62M 6/90, H01M 2/20, H01M 10/60, H01M 10/613, H01M 10/625, H01M 10/653, H01M 10/6555

(54) **BATTERY PACK AND ELECTRIC BICYCLE**
BATTERIEPACK UND ELEKTRISCHES FAHRRAD
BLOC-BATTERIE ET VÉLO ÉLECTRIQUE

(30) Priority: 31.03.2011 JP 2011078296; 31.03.2011 JP 2011078297; 31.03.2011 JP 2011078298; 31.03.2011 JP 2011078299; 31.03.2011 JP 2011078300
(43) Date of publication of application: 05.02.2014
(73) Proprietor: NEC Energy Devices, Ltd., Kanagawa 2525298 (JP)
(72) Inventor: SUZUKI, Toru, Sagamihara-shi Kanagawa 252-5298 (JP)
(74) Representative: Betten & Resch
(86) International application number: PCT/JP2011/005028
(87) International publication number: WO 2012/131798

(56) References cited:
- EP-A1- 2 031 672
- WO-A1-2008/007767
- WO-A1-2011/013767
- WO-A1-2011/027817
- JP-A- 2003 297 303
- JP-A- 2004 327 311
- JP-A- 2007 257 901
- JP-A- 2009 163 932
- JP-A- 2009 252 553
- US-A1- 2004 050 414
- US-A1- 2005 202 315
- US-A1- 2009 297 936

## Description

### BACKGROUND OF THE INVENTION

### FIELD OF THE INVENTION

The present invention relates to a battery pack, which is formed by connecting a plurality of secondary batteries, and an electric bicycle in which the battery pack is installed.

### DESCRIPTION OF RELATED ART

In electric bicycles, various kinds of secondary batteries are used as power sources for drive or auxiliary drive. Among the above secondary batteries, a lithium ion secondary battery, in which charge and discharge take place as lithium ions move between positive and negative electrodes, is preferably used as a battery for a drive power source because the lithium ion secondary battery has the following battery characteristics: high energy density and high output power.

The following lithium ion batteries are known: a lithium ion battery that is in the shape of a cylinder around which positive and negative electrodes are stacked and wound via separators; and a flat lithium ion battery in which positive and negati ve electrodes are stacked via separators.

Among the above lithium ion batteries, the flat lithium ion battery is preferably used as a battery for a power source of a device driving motor or the like because it is easy to increase capacity per unit battery by increasing the number of positive and negative electrodes stacked or by increasing the areas of positive and negative electrodes.

As for a unit battery of the flat lithium ion battery, it is possible to make effective use of the high energy density that the lithium ion battery has by covering battery elements with a film casing material.

The film-covered battery is used in various ways. For example, what is proposed in Patent Document 1 (JP-A-2007-257901) is a battery pack for an electric bicycle that uses a film-covered battery.

Document US 2009/0297936 A1 discloses an assembled battery in which a plurality of flat cells having battery containers using a flexible film are vertically stacked by opposing the flat surfaces to each other. The assembled battery has a spacer disposed between the adjacent cells.

### SUMMARY OF THE INVENTION

The following electric bicycles are known: an electric bicycle that is designed to reduce burden on a rider when the bicycle is running with the help of an operation of an attached motor; and an electric bicycle that can be self-propelled even when a rider is not pedaling. A motor, a driving device, and a motor-driving battery add to the mass of an electric bicycle. Therefore, such devices are required to be smaller in mass. The electric bicycles require a large-capacity battery when cunning a long distance or for a long time in order to make use of an operation of a motor.

Among the various kinds of batteries, a lithium ion battery that is large in gravimetric energy density and volumetric energy density is preferably used for an electric bicycle. Among the above batteries, a film-covered battery. which is covered with a film casing material, is characterized by high energy efficiency compared with a battery for which a metal can is used as a casing material.

There is an electric bicycle whose wheel is mounted on a bearing that is attached to the body of the bicycle via a suspension. However, the impact imposed on the bicycle body is significantly different from that on an automobile. Therefore, a battery pack attached to the body of the bicycle is greatly affected by shocks and vibrations from a road surface.

Meanwhile, the film-covered battery, which is excellent in energy density, is covered with a thin film casing material. Accordingly, in many cases, great importance is attached to taking measures to handle shocks and vibrations when compared with a battery stored in a metal casing can.

In the battery pack disclosed in Patent Document 1, a heat collection member is provided in the following manner so as to draw the generated heat away from the flat film-covered battery: a gap is provided between heat collection plates at both edge portions, and an intermediate heat collection plate is disposed. However, it takes a great deal of effort to insert a low-rigidity flat battery into a space whose three sides are open between the heat collection plates without deformation of the battery and any other troubles.

If the gap becomes widened to make it easier to insert the flat battery, a space emerges between the intermediate heat collection plate and the battery. As a result, thermal contact of a unit battery with a heat collection plate becomes poor. On the other hand, when the gap is small, it is difficult to complete the task for a short period of time.

Further, in the battery pack disclosed in Patent Document 1, three sides of the heat collection member are open. Accordingly, the battery pack is insufficient in terms of measures for fixing the film-covered battery against vibrations and shocks.

The present invention is defined in the independent claim. The dependent claims define advantageous embodiments thereof.

The present invention is intended to provide a battery pack using a film-covered battery, which is provided with a battery protective member allowing stabile holding of the film-covered battery while mitigating vibrations and shocks and minimizing increase in weight of the electric bicycle.

Further, the present invention is intended to provide a battery pack using a *film-covered battery, which is provided with a battery protective member allowing stable holding of the film-covered battery while mitigating vibrations and shocks, maintaining excellent heat release performance, and minimizing increase in weight of the electric bicycle.*

To solve the above problem, according to an aspect of the present invention, there is provided a battery pack including a battery protective member having a first plate section and a second plate section which is integrally connected to both edge portions of a width direction of the first plate section and extends substantially in a direction perpendicular to both surfaces of the first plate section, wherein flat batteries are placed on the first plate section.

In the present invention, "substantially perpendicular" includes a situation where it is effectively possible to obtain perpendicular and desired operations and effects, for example, including an angle of 80 to 100 degrees.

In the battery pack, a cross section of the battery protective member, which is orthogonal to a longer direction of the first plate section, has a shape of "H".

In the battery pack, a surface on which the flat batteries are placed is formed on both surfaces of the first plate section.

In the battery pack, the flat batteries are film-covered batteries.

In the battery pack, pull-out tabs of the flat batteries are taken out in the longer direction of the first plate section of the protective member.

In the battery pack, one adhesive side of a two-sided adhesive tape is attached to the flat battery, which then adheres to the first plate section or an adjoining flat battery surface.

The battery pack includes a battery protective member block having the first plate section on at least one surface of which the flat batteries are so placed as to rise above a height of the second plate section standing from the first plate section, wherein a plurality of the battery protective member blocks are integrated with the flat batteries facing each other so placed thereon as to rise above the height of the second plate section.

In the battery pack, the flat batteries are stacked on the first plate section.

In the battery pack, a flat-plate surface of the flat battery is put on the first plate section.

The battery pack includes a battery connecting structure integrating a plurality of battery protective member blocks each having the first plate section on which the flat batteries with the flat batteries placed thereon facing each other, wherein the total height of the flat batteries integrated so as to face each other is greater than double the height of the second plate section.

The battery pack includes a plurality of flat batteries which are stacked on the first plate section in such a manner that front and rear sides thereof alternately face upward, wherein a positive-electrode pull-out tab and a negative-electrode pull-out tab of each of the flat batteries are pull-out in the same direction.

In the battery pack, the flat batteries each have substantially a symmetrical shape with respect to a line passing through a center between the positive-electrode pull-out tab and negative-electrode pull-out tab which are pull-out in the same direction.

In the present invention, "substantially symmetrical" includes a situation where it is effectively possible to obtain symmetrical and desired operations and effects. For example, a displacement in the symmetry can be tolerated as long as the positive pull-out tab and negative pull-out tab can be smoothly and conductively connected in a stacked state of the flat batteries.

In the battery pack, pull-out tabs of the flat batteries are taken out in the longer direction of the first plate section of the protective member.

In the battery pack, the battery protective member is made of a highly heat-conductive material.

In the battery pack, the highly heat-conductive material is a metallic member or a member made of synthetic resin with highly heat-conductive material particles dispersed.

In the battery pack, the metallic material is one of aluminum, aluminum alloy, and copper, and the highly heat-conductive material particles are one of aluminum nitride, silicon nitride and alumina.

In the battery pack, the flat batteries an opening of each of which is sealed with a film casing material are placed on the first plate section, and a vertical projection plane of an outer edge of each of the flat batteries to the first plate section is positioned closer to the center than the outer edge of the first plate section is.

According to another aspect of the present invention, there is provided an electric bicycle including the above-described battery pack.

### Advantages of the invention

According to the battery pack of the present invention, it is possible to definitely protect, from shocks and the like, a lithium ion batteries or the like which are excellent in energy efficiency and each covered with film casing material by the lightweight battery protective member of the present invention. Thus, even if the battery pack is constantly affected by vibrations and shocks when being used as in a battery pack of an electric bicycle, it is possible to expect that stable operation is maintained for a long time. Further, the vertical projection plane of the battery with respect to the battery protective member is positioned closer to the center than the outer edge of the first plate section is, so that even when a large shock is given to the battery pack, the outer edge of the flat battery is protected by the protective member. Moreover, it is possible to definitely protect the batteries from shocks and the like by the battery protective member made of the highly heat-conductive material, so that even if the battery pack is constantly affected by vibrations and shocks when being used as in a battery pack of an electric bicycle, it is possible to expect that stable operation is maintained for a long time and the batteries are less subject to change in output characteristics by a change in ambient temperature.

As described above, the batteries can be protected from shocks and the like by the lightweight battery protective member of the present invention. Moreover, the pull-out tabs of adjoining unit batteries have different polarities in a state where the unit batteries are stacked on the battery protective member, allowing series connection of the stacked unit batteries only by only connecting the pull-out tabs of the adjoining unit batteries, a distance between which is smallest, which allows a battery having an arbitrary capacity and an electric bicycle mounting therein the battery pack to be provided without involving diagonal connection of the pull-out tabs with respect to the stacking direction.

### BRIEF DESCRIPTION OF THE DRAWINGS

FIG. 1 is a diagram showing a unit battery 100 that makes up a battery pack according to an embodiment of the present invention. FIG. 1A is a diagram showing the unit battery 100 whose opening is sealed with heat-sealing sections formed on four sides. FIG. 1B is a diagram showing the unit battery 100 whose opening is sealed with heat-sealing sections formed on three sides.
FIG. 2 is a diagram showing how to connect a connection tab 125 to a positive-electrode pull-out tab 120 of the unit battery 100.
FIG. 3 is a diagram showing the situation where holes are made on a positive pull-out tab and negative pull-out tab for connecting unit batteries 100 in series.
FIG. 4 is a diagram illustrating a holder member 200 that makes up the battery pack according to the embodiment of the present invention.
FIG. 5 is a perspective view of a board 300 that is used in connecting unit batteries 100 in series in the battery pack according to the embodiment of the present invention.
FIG. 6 is a diagram illustrating a battery protective member 400 that makes up the battery pack according to the embodiment of the present invention.
FIG. 7 is a diagram illustrating a process of producing a battery connecting structure 500 that makes up the battery pack according to the embodiment of the present invention.
FIG. 8 is a diagram illustrating a process of producing the battery connecting structure 500 that makes up the battery pack according to the embodiment of the present invention.
FIG. 9 is a diagram illustrating a process of producing the battery connecting structure 500 that makes up the battery pack according to the embodiment of the present invention.
FIG. 10 is a diagram illustrating a process of producing the battery connecting structure 500 that makes up the battery pack according to the embodiment of the present invention.
FIG. 11 is a diagram illustrating a process of producing the battery connecting structure 500 that makes up the battery pack according to the embodiment of the present invention.
FIG. 12 is a diagram illustrating a process of producing the battery connecting structure 500 that makes up the battery pack according to the embodiment of the present invention.
FIG. 13 is a diagram illustrating a process of producing the battery connecting structure 500 that makes up the battery pack according to the embodiment of the present invention.
FIG. 14 is a diagram illustrating a process of producing the battery connecting structure 500 that makes up the battery pack according to the embodiment of the present invention.
FIG. 15 is a diagram illustrating a process of producing the battery connecting structure 500 that makes up the battery pack according to the embodiment of the present invention.
FIG. 16 is a diagram illustrating a process of producing the battery connecting structure 500 that makes up the battery pack according to the embodiment of the present invention.
FIG. 17 is a diagram illustrating a process of producing the battery connecting structure 500 that makes up the battery pack according to the embodiment of the present invention.
FIG. 18 is a diagram illustrating a process of producing a battery pack according to the embodiment of the present invention.
FIG. 19 is a diagram illustrating a process of producing the battery pack according to the embodiment of the present invention.
FIG. 20 is a diagram illustrating a process of producing the battery pack according to the embodiment of the present invention.
FIG. 21 is a diagram illustrating a process of producing the battery pack according to the embodiment of the present invention.
FIG. 22 is a diagram illustrating a process of producing the battery pack according to the embodiment of the present invention.
FIG. 23 is a diagram illustrating a process of producing the battery pack according to the embodiment of the present invention.
FIG. 24 is a diagram illustrating a process of producing the battery pack according to the embodiment of the present invention.
FIG. 25 is a diagram illustrating a process of producing the battery pack according to the embodiment of the present invention.
FIG. 26 is a diagram illustrating an electric bicycle according to the embodiment of the present invention.

### DESCRIPTION OF EXEMPLARY EMBODIMENTS

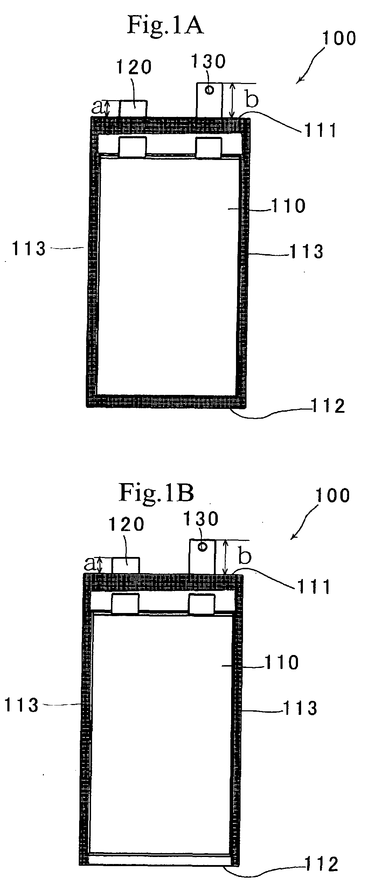

The following describes an embodiment of the present invention with reference to the accompanying drawings. FIG. 1 is a diagram showing a unit battery 100 that makes up a battery pack according to an embodiment of the present invention. What is used for the unit battery 100 is a lithium ion secondary battery in which charge and discharge take place as lithium ions move between positive and negative electrodes.

The unit battery 100 of the present invention has a flat shape and therefore is also referred to as a flat battery.

A main unit 110 of the unit battery has a structure in which the following components are stored in a film casing material, which is in the shape of a rectangle in planar view: a laminated electrode assembly, in which a plurality of sheet positive electrodes and a plurality of sheet negative electrodes are stacked via separators, and an electrolytic solution (both not shown). From an upper end portion 111 of the unit battery main unit 110, a positive-electrode pull-out tab 120 and a negative-electrode pull-out tab 130 are pull-out.

The positive-electrode pull-out tab 120 and the negative-electrode pull-out tab 130 are both in the shape of a plate, and are each connected directly, or via a lead body or the like, to the sheet positive electrodes and the sheet negative electrodes in the film casing material. The film casing material includes a heat-sealing resin layer on a plane facing the inside of the battery. Moreover, a film casing material is used for a plane facing the outside of the battery: the film casing material is made by stacking protective films on laminated metallic foil made of aluminum foil or the like.

*More specifically, on a plane that is positioned on the outer-surface side of the aluminum foil, a member that has strength and heat resistance, such as nylon or polyethylene terephthalate, is stacked; on the inner-surface side, a material that is excellent in heat-sealing performance, such as polypropylene or polyethylene, is stacked.*

*With a battery element, in which positive and negative electrodes are stacked via separators, and an electrolytic solution stored in the film casing material, the periphery of the film casing material, i.e. the upper end portion 111, lower end portion 112 and two side end portions 113, is heat-sealed. Therefore, the inside thereof is hermetically sealed.*

*In the above unit battery 100, aluminum or aluminum alloy is used as a material of the positive-electrode pull-out tab 120; nickel, nickel-plated copper, or nickel-copper clad is generally used as a material of the negative-electrode pull-out tab 130. According to the present embodiment, the positive-electrode pull-out tab 120 made of aluminum and the negative-electrode pull-out tab 130 made of nickel are used.*

*The above has described the case in which the upper end portion 111, lower end portion 112 and two side end portions 113 of the battery element are heat-sealed with the film casing material. However, for example, one sheet of film casing material may be brent to cover the battery element, with three sides of the battery element heat-sealed to close an opening. In this case, any end portion can serve as a blending portion of the film casing material. However, it is preferred that the lower end portion 112 serve as a bending portion of the film casing material.*

*In order to make the battery pack of the present invention, a positive pull-out tab of a unit battery 100 and a negative pull-out tab of a unit battery 100, which is adjacent to the above unit battery 100, are mechanically bound together with bolts and nuts and therefore connected together electrically. In this case, the structure in which the aluminum positive-electrode pull-out tab 120 of the unit battery 100 and the nickel negative-electrode pull-out tab are mechanically bound together could lead to a decline in conductivity after a predetermined period of time has passed due to problems pertaining to differences in potential. Accordingly, in the battery pack of the present invention, at a point where a positive pull-out tab of a unit battery 100 and a negative pull-out tab, which is adjacent to the above unit battery 100, are mechanically bound together, the pull-out tabs are connected in such* a *way that the members made of nickel come in contact with each other.*

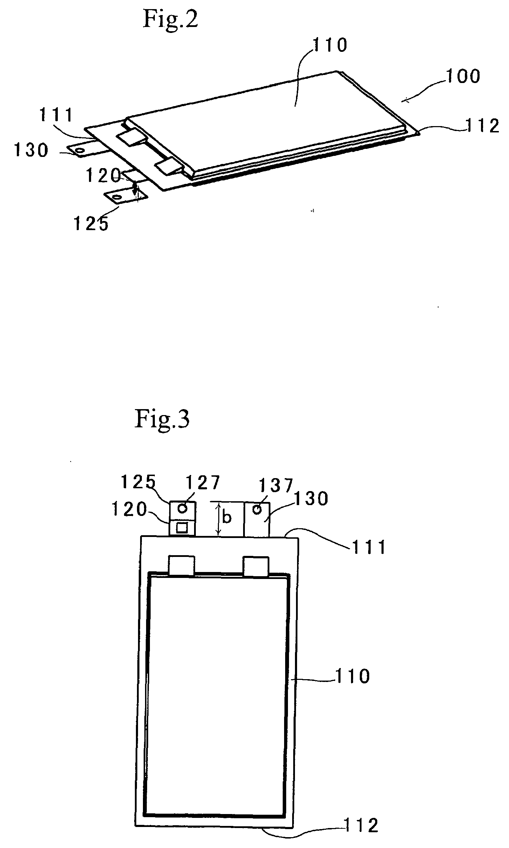

*The configuration to achieve the above will be described. As shown in* *FIG. 1**, in a process of making the battery pack, suppose that the aluminum positive-electrode pull-out tab 120 of the unit battery 100 has a length of a from the upper end portion 111, and the nickel negative-electrode pull-out tab 130 a length of b (b>a) from the upper end portion 111. Then, to the aluminum positive-electrode pull-out tab 120 having a length of a, a tab member 125 made of nickel is connected and added by means of ultrasonic waves so that the length from the upper end portion 111 comes to b (see* *FIGS. 2 and 3**). In order to allow unit batteries 100 to be connected in series, a hole 127 is made on the tab member 125, which serves as a positive pull-out tab; a hole 137 is made on the negative-electrode pull-out tab 130. Incidentally, hereinafter, the entire pull-out tab, which is formed by connecting the tab member 125, is also referred to as a positive-electrode pull-out tab 120.*

*As described below, in the battery pack of the present invention, in a process of electrically connecting a plurality of unit batteries 100, the pull-out tabs having different polarities are connected together in such a way that the nickel members (the tab members 125 and the negative-electrode pull-out tabs 130) come in contact with each other. Accordingly, the electrically connected portions of the adjoining unit batteries turn out to be the portions that are made of the same type of metallic material and are connected electrically. Therefore, the problems pertaining to differences in potential do not arise, and it is substantially possible to prevent a decline over time in conductivity from occurring.*

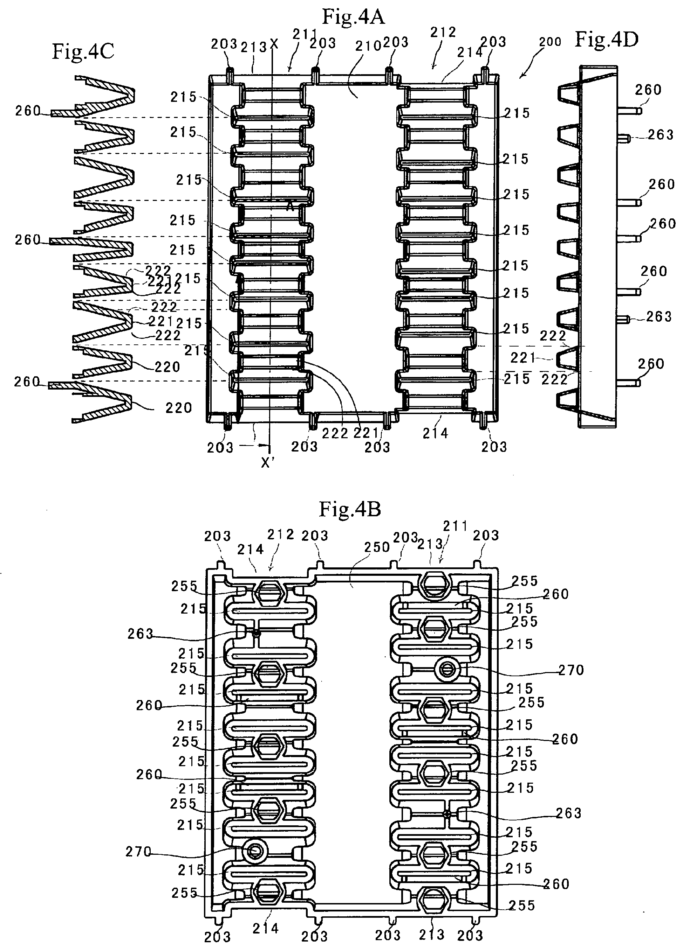

*The following describes a holder member 200, which is used in electrically connecting the positive pull-out tabs and negative pull-out tabs of a plurality of unit batteries 100 in the battery pack of the embodiment of the present invention.* *FIG. 4* *is a diagram illustrating the holder member 200.* *FIG. 4A* *is a diagram showing the holder member 200 seen from a first main surface side.* *FIG. 4B* *is a diagram showing the holder member 200 seen from a second main surface side.* *FIG. 4C* *is a cross-sectional view of* *FIG. 4A* *taken along X-X'.* *FIG. 4D* *is a side view of the holder member 200.*

*On the holder member 200, a first surface 210 and a second surface 250, which is on the opposite side of the holder member 200 from the first surface 210, are formed; the holder member 200 is a member made of synthetic resin such as ABS resin. In a first row 211 of the first surface 210 of the holder member 200, pull-out tab insertion holes 215 are formed side by side from top to bottom as shown in* *FIG. 4A**. Similarly, in a second row 212 of the first surface 210, pull-out tab insertion holes 215 are formed side by side from top to bottom. When a unit battery 100 is attached to the holder member 200, the pull-out tab insertion holes 215 provided on the first surface 210 are used. The pull-out tab insertion holes 215 are holes passing therethrough from the first surface 210 to the second surface 250; and holes into which the pull-out tabs of the unit battery 100 can be inserted.*

*As shown in* *FIG. 4A**, on the upper and lower sides of the first and second rows 211 and 212, pull-out tab guide ribs 203 are provided. A pull-out tab guidance section 213 is provided in such a way that the pull-out tab guidance section 213 is sandwiched between the pull-out tab guide ribs 203 of the first row 211. Moreover, a pull-out tab guidance concave section 214 is provided in such a way that the pull-out tab guidance concave section 214 is sandwiched between the pull-out tab guide ribs 203 of the second row 212.*

*In the first row 211, based on regulations by the pull-out tab guide ribs 203, a pull-out tab of an edge-side unit battery 100, out of a plurality of unit batteries 100 connected in series, is guided to the second surface 250 from the first surface 210 via the pull-out tab guidance section 213.*

*In the second row 212, based on regulations by the pull-out tab guide ribs 203, a pull-out tab of an edge-side unit battery 100, out of a plurality of unit batteries 100 connected in series, is guided to the second surface 250 from the first surface 210 via the pull-out tab guidance concave section 214.*

*Among a plurality of unit batteries 100 connected in series, a pull-out tab of a unit battery 100 that is not on the edge side passes through the pull-out tab insertion hole 215 and is attached to the holder member 200. In the upper and lower areas of the pull-out tab insertion hole 215 (as shown in* *FIG. 4A**), pull-out tab guide projecting sections 220 are provided in such a way that the pull-out tab insertion hole 215 is sandwiched between the pull-out tab guide projecting sections 220, which are positioned on the upper and lower sides of the pull-out tab insertion hole 215. The pull-out tab guide projecting sections 220 are generally made up of a top section 221 and two tapered sides 222, which are seamlessly connected to the top section 221. When a pull-out tab of a unit battery 100 is inserted into a pull-out tab insertion hole 215, a space between the two tapered sides 222 becomes gradually narrower, making it easy to attach the unit battery 100 to the holder member 200. Therefore, it is possible to improve efficiency in connecting a plurality of unit batteries 100 in series and increase productivity.*

*To the second surface 250 of the holder member 200, a board 300 can be attached. On the board 300, the pull-out tabs of the adjacent unit batteries 100 are bent, put on each other and connected, resulting in an electrical connection. When the pull-out tabs of the adjacent unit batteries 100 are connected, the pull-out tabs are mechanically bound together with bolts and nuts. Accordingly, six nut housing sections 255 for housing nuts 256 are provided in the first row 211 of the second surface 250, and five in the second row 212. Moreover, on the second surface 250, divider pieces 260, which are designed to ensure insulation between the pull-out tab connection sections of a unit battery 100 that are formed on the board 300 or between pull-out tab connection sections and pull-out tabs, are provided at three locations in the first row 211 and at two locations in the second row 212.*

*Positioning projecting sections 263 are projections that help position the board 300 when the board 300 is attached to the holder member 200; one positioning projection section 263 is positioned in the first row 211, and the other in the second row 212. Moreover, one screw hole 270, which is used to bind the board 300 and the holder member 200 together after the board 300 is attached to the holder member 200 with the use of the above positioning projecting sections 263, is provided in the first row 211, and the other in the second row 212.*

*The following describes the configuration of the board 300 on which connection sections for the pull-out tabs of a plurality of unit batteries 100 are formed in the battery pack of the embodiment of the present invention.*

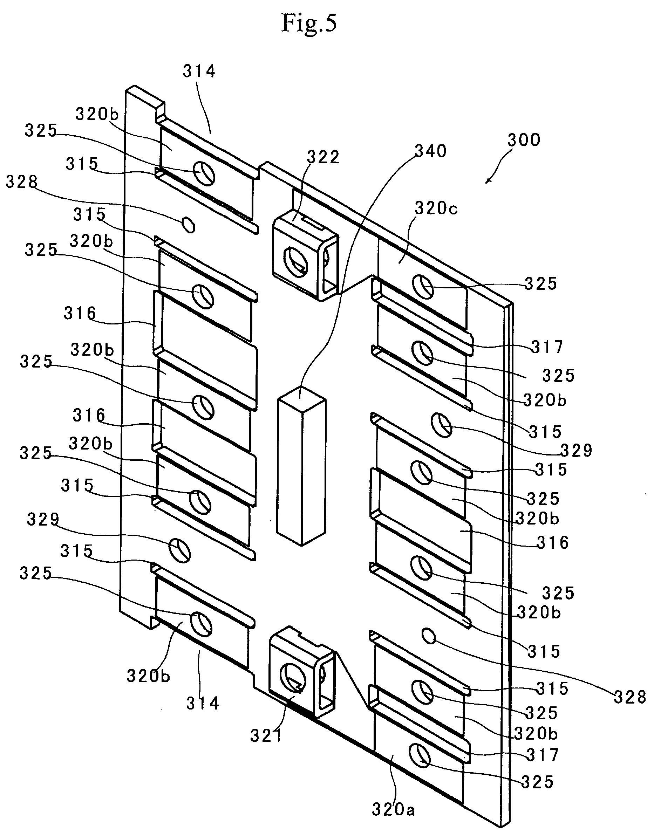

*FIG. 5* *is a perspective view of the board 300 that is used in connecting unit batteries 100 in series in the battery pack of the embodiment of the present invention.*

*The board 300, which is made by mainly using glass epoxy or the like as base material, is attached to the second surface 250 of the holder member 200 before being used. The peripheral shape of the board 300 substantially matches the peripheral shape of the second surface 250 of the holder member 200. At two locations on the periphery of the board 300, pull-out tab guidance notch sections 314 are formed so as to correspond to the pull-out tab guidance concave sections 214 of the holder member 200.*

*Moreover, on the board 300, pull-out tab extraction holes 315 are provided so as to correspond to the pull-out tab insertion holes 215 of the holder member 200. Moreover, on the board 300, divider piece extraction holes 317 are provided so as to correspond to the divider pieces 260 of the holder member 200. Furthermore, on the board 300, pull-out tab*/*divider piece extraction holes 316 are provided to support both the pull-out tab insertion holes 215 and divider pieces 260 of the holder member 200. The above holes are all through-holes that pass through the board 300 from one main surface to the other main surface; and are so formed that the pull-out tabs of unit batteries 100, the divider pieces 260 and the like can be inserted therein.*

*In areas where the pull-out tabs of unit batteries 100 are fixed to the board 300 with bolts and nuts, the following sections are provided: thin-film electrode sections 320a, 320b and 320c.*

*There is an electrical connection between a thin-film electrode sections 320a and a metallic positive terminal electrode washer 321, which is fixed to the board 300. There is an electrical connection between a thin-film electrode section 320c and a metallic negative terminal electrode washer 322, which is fixed to the board 300. To the positive terminal electrode washer 321 and the negative terminal electrode washer 322, the pull-out tabs of an edge portion of a unit battery 100 that is connected in series are connected. Therefore, the positive terminal electrode washer 321 and the negative terminal electrode washer 322 are used as terminals for charge and discharge of power for the battery pack.*

*Moreover, there is an electrical connection between a thin-film electrode section 320b and a terminal section, not shown, of a connector 340, allowing the potential for monitoring each unit battery 100 to be measured through the connector 340. Incidentally, the connector 340 may be formed so that a signal from a temperature measurement sensor (not shown) that measures temperatures of unit batteries 100 can be taken out.*

*For each of the thin-film electrode sections 320a, 320b and 320c, pull-out tab connection screw holes 325 are provided: pull-out tab connection bolts 257, which are used to fix the pull-out tabs of unit batteries 100, are inserted into the pull-out tab connection screw holes 325. To the thin-film electrode section 320a and the thin-film electrode section 320c, one pull-out tab of an edge-portion unit battery 100, out of the unit batteries 100 connected in series, is fixed. Meanwhile, two thin-film electrode sections 320b are fixed in such a way that the pull-out tabs of the adjoining unit batteries 100 are bent and put on each other.*

*On the board 300, two positioning holes 328 are formed so as to correspond to the positioning projecting sections 263 provided on the second surface 250 of the holder member 200. As the two positioning projecting sections 263 pass through the positioning holes 328, the holder member 200 and the board 300 can be easily positioned when being bound together, contributing to an improvement in productivity. Moreover, board fixing screw holes 329, which are formed on the board 300, are holes into which board fixing screws 271, which are used to fix the holder member 200 to the board 300, are inserted.*

*The following describes* a *battery protective member 400, which protects a plurality of unit batteries 100 at a time when the unit batteries 100 are connected in series and turned into a battery connecting structure 500 in the battery pack of the embodiment of the present invention.*

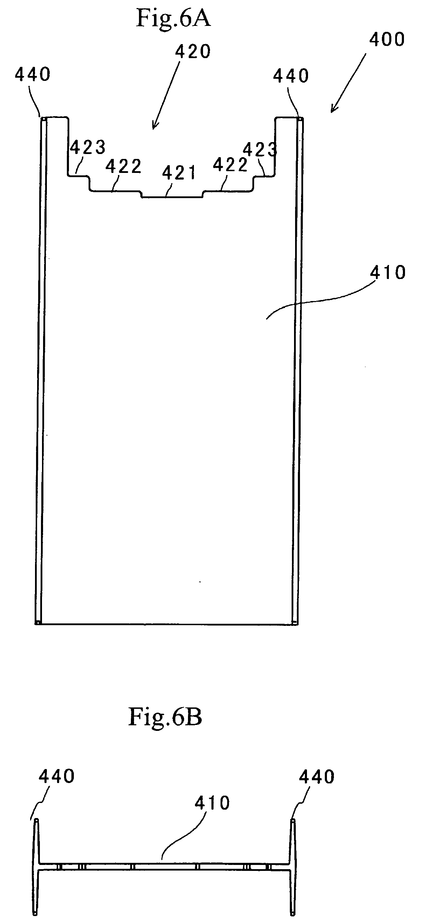

*FIG. 6* *is a diagram illustrating the battery protective member 400, which makes up the battery pack of the embodiment of the present invention.* *FIG. 6A* *is a diagram showing the battery protective member 400 in a way that faces a first plate section 410 to which a main surface of the unit battery 100 is bonded, and* *FIG. 6B* *is a diagram showing the battery protective member 400 seen from an upper end of* *FIG. 6A**.*

*when unit batteries 100 are placed, the battery protective member 400 is inserted between the unit batteries 100 placed before being used.*

*The battery protective member 400 may be made of synthetic resin, such as ABS resin, polyethylene terephthalate resin or polycarbonate resin. Moreover, the battery protective member 400 may also be made from a metallic member or a member made of synthetic resin with highly heat-conductive material particles dispersed. The use of such a material enables a highly heat-conductive and lightweight battery protective member 400 to be realized.*

*More specifically, the metallic member is aluminum, aluminum alloy, or copper. The highly heat-conductive material particles are aluminum nitride, silicon nitride or alumina.*

*For the synthetic resin material, the following can be listed: ABS resin, polyethylene terephthalate resin, or polycarbonate resin. A material with highly heat-conductive material particles dispersed in the above resin can be listed.*

*Among the above substances, aluminum or aluminum alloy is suitable.*

*In the case of aluminum, aluminum alloy or the like, an alumite treatment film or insulating film is preferably formed on a surface. The above film prevents troubles from occurring even when a voltage applying section comes in contact with the protective member.*

*The first plate section 410 of the battery protective member 400 is a member that is sandwiched between a unit battery 100 and a unit battery 100 that is connected in series to the above unit battery 100. Meanwhile, second plate sections 440 are so provided as to extend in a direction perpendicular to the first plate section 410 from both edge portions of the first plate section 410. Therefore, as shown in* *FIG. 6B**, the cross-sectional surface of the battery protective member 400 is in the shape of "H."*

*Moreover, a notch section 420, which are made up of the following, is formed on the first plate section 410: a first notch section 421, which is the deepest notch section; second notch sections 422, which are disposed on both sides of the first notch section 421 and are the second deepest notch sections after the first notch section 421; and third notch sections 423, which are disposed on both sides of the second notch sections 422 and are the shallowest notch sections.*

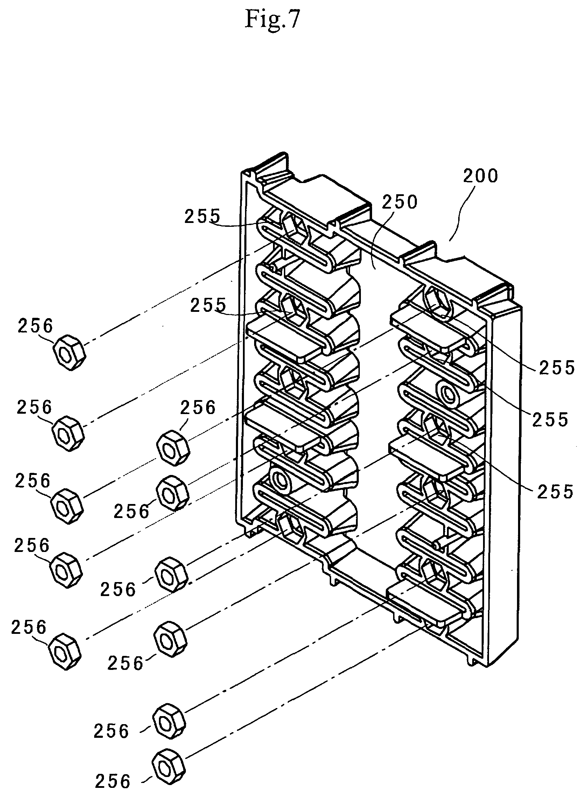

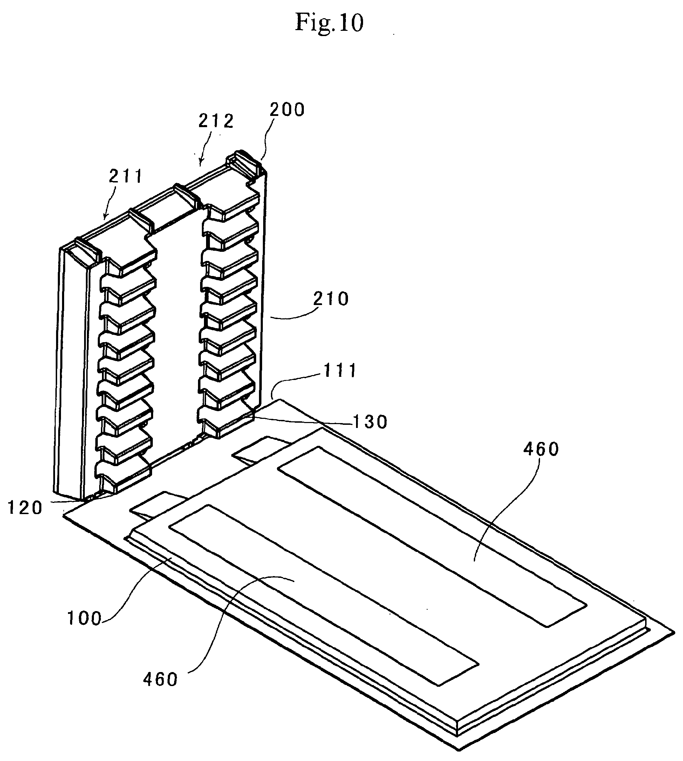

*The following describes processes of producing, from each of the above members, a battery connecting structure 500 in which unit batteries 100 are connected, with reference to* *FIGS. 7 to 17. FIGS. 7 to 17* *are diagrams illustrating the processes of producing the battery connecting structure 500, which makes up the battery pack of the embodiment of the present invention.*

*First, in a process shown in* *FIG. 7**, nuts 256 are mounted in all the nut housing sections 255, which are provided on the second surface 250 of the holder member 200. The dimensions of the inner periphery of the nut housing sections 255 are so set that the nuts 256 cannot be easily removed once the nuts 256 are placed into the nut housing sections 255.*

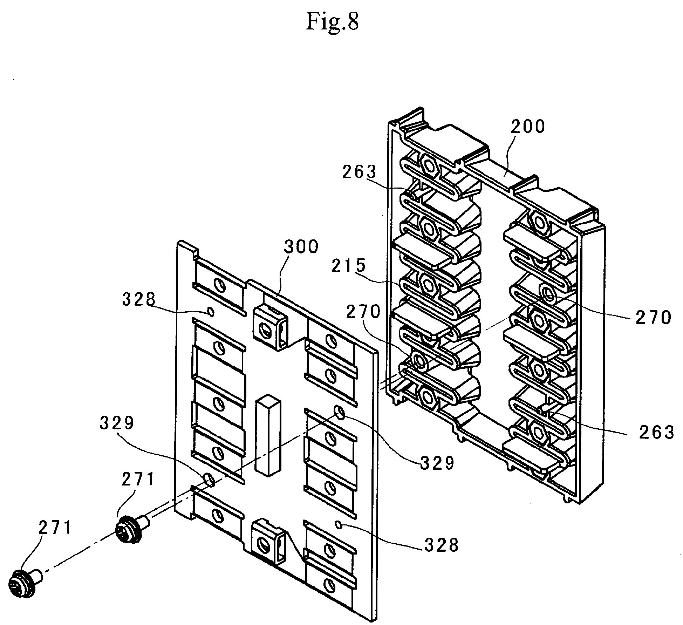

*In a subsequent process shown in* *FIG. 8**, the positioning projecting sections 263 of the holder member 200 are inserted into the positioning holes 328 of the board 300 so that the holder member 200 and the board 300 are positioned. Subsequently, two board fixing screws 271 are inserted into the board fixing screw holes 329 and screwed into screw holes 270. As a result, the holder member 200 is fixed to the board 300. Incidentally, for the board fixing screw holes 329, various kinds of screw can be used. However, the use of self-tapping screws helps improve work efficiency during the production process.*

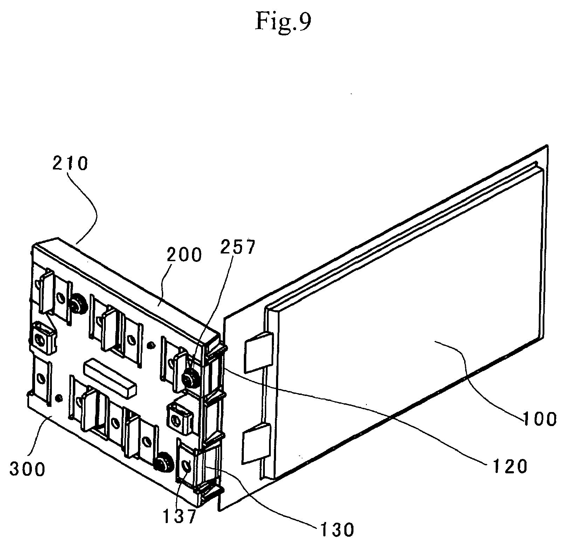

*In a subsequent process shown in* *FIG. 9**, a unit battery 100 is disposed on the first surface 210 of the holder member 200. The negative-electrode pull-out tab 130 of the unit battery 100 is bent so as to come in contact with the thin-film electrode section 320b of the board 300 with the help of the pull-out tab guidance concave section 214. Moreover, the positive-electrode pull-out tab 120 of the unit battery 100 is bent so as to come in contact with the thin-film electrode section 320a of the board 300 with the help of the pull-out tab guidance section 213. The pull-out tab connection bolts 257 are inserted into the holes 127 of the positive-electrode pull-out tab 120 and the pull-out tab connection screw holes 325; the pull-out tab connection bolts 257 are screwed into the nuts 256 housed in the nut housing sections 255. In this manner, the process of mounting the first unit battery 100 is completed.*

*In the battery pack of the present invention is featured also in that the flat unit batteries each having a symmetrical shape with respect to a line passing through a center between the positive-electrode pull-out tab 120 and negative-electrode pull-out tab 130 which are pull-out in the same direction are stacked on the battery protective member in such a manner that front and rear sides of the flat unit batteries alternately face upward.*

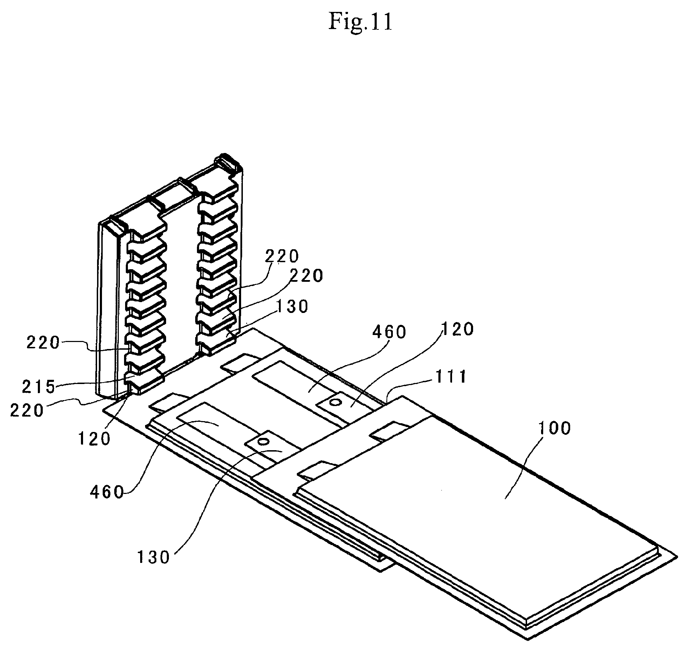

*In a subsequent process shown in* *FIG. 11**, a spacer (not shown) that is thicker than the two-sided adhesive tapes 460 is placed on the first unit battery 100 attached. Furthermore, two pull-out tabs of the second unit battery 100 slide on the spacer and are inserted into the pull-out tab insertion holes 215. As described above, the pull-out tab guide projecting sections 220 are disposed on the upper and lower sides of the two pull-out tab insertion holes 215. Furthermore, the tapered sides 222 are provided on the pull-out tab guide projecting sections 220. Therefore, a space between the upper and lower pull-out tab guide projecting sections 220 becomes gradually narrower, enabling the pull-out tabs of a unit battery to be easily guided to the pull-out tab insertion holes 215 of the holder member 200.*

*In this case, the positive-electrode pull-out tab 120 of the first unit battery 100 attached to the holder member 200 is disposed in the first row 211, and the negative-electrode pull-out tab 130 in the second row 212. On the other hand, the positive-electrode pull-out tab 120 of the second unit battery 100 attached to the holder member 200 is disposed in the second row 212, and the negative-electrode pull-out tab 130 in the first row 211. Hereinafter, in a process of sequentially placing unit batteries 100, the positive-electrode pull-out tabs 120 of the odd unit batteries 100 attached are disposed in the first row 211, and the negative-electrode pull-out tabs 130 in the second row 212. The positive-electrode pull-out tabs 120 of the even unit batteries 100 attached are disposed in the second row 212, and the negative-electrode pull-out tabs 130 in the first row 211. In this manner, in a direction in which the unit batteries 100 are placed or stacked, the unit batteries 100 are so disposed that the pull-out tabs of the adjacent unit batteries 100 face different directions. Accordingly, on the board 300, connection does not have to take place diagonally with respect to the placing or stacking direction.*

*After it is confirmed that the upper end portion 111 of the second unit battery 100 is pushed into until the upper end portion 111 hits the first surface 210 of the holder member 200, a subsequent task starts on the board 300.*

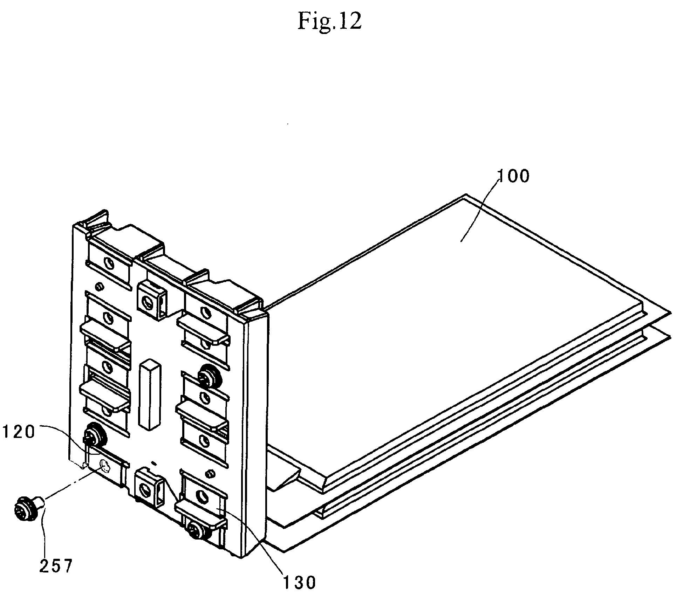

*In a subsequent process shown in* *FIG. 12**, the positive-electrode pull-out tab 120 of the second unit battery 100 attached is bent downward as shown in the diagram, and is put on the negative electrode 130 of the first unit battery 100 attached. After that, a pull-out tab connection bolt 257 is inserted into a hole of each pull-out tab, or pull-out tab connection screw hole 325, and is screwed into a nut 256, forming a connection portion for the negative-electrode pull-out tab 130 of the first unit battery 100 attached on the thin-film electrode section 320b and the positive-electrode pull-out tab 120 of the second unit battery 100 attached. In this manner, an electrical connection is completed.*

*Meanwhile, the negative-electrode pull-out tab 130 of the second unit battery 100 attached is bent upward as shown in the diagram, thereby making preparations for the positive-electrode pull-out tab 120 of the third unit battery 100 attached to be connected.*

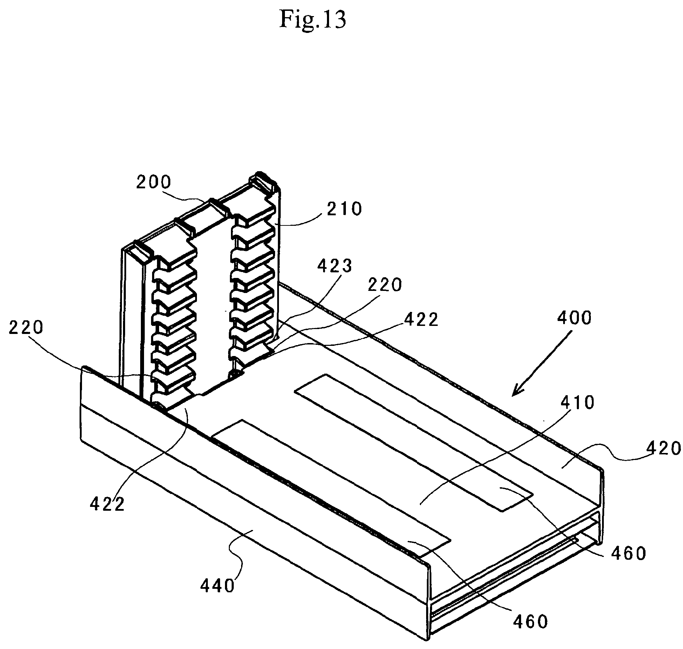

*In a subsequent process shown in* *FIG. 13**, in a similar way to the case where the second unit battery 100 is attached, a battery protective member 400 is attached with the use of a spacer. The upper surface of the second unit battery 100 and the lower surface of the battery protective member 400 are bonded together with two strips of two-sided adhesive tape 460. Furthermore, as shown in the diagram, two strips of two-sided adhesive tape 460 are attached to the upper surface of the battery protective member 400. With the use of the two-sided adhesive tapes 460, the battery protective member 400 is fixed to the third unit battery 100 attached to the holder member 200.*

*The battery pack having the battery protective member 400 can quickly release heat generated from the unit batteries placed on the battery protective member 400 and can quickly make the temperature uniform among the unit batteries mounted to the battery protective member.*

*Particularly, in a battery pack that has been left outside for a long time in cold climates to fall in temperature, the unit batteries disposed at the center portion of the battery protective member quickly rise in temperature immediately after start-up; however, the unit batteries disposed at both end portions of the battery protective member are slow in temperature rise, resulting in a variation in the output among the unit batteries.*

*On the other hand, in the battery protective member of the present invention that uses the highly heat-conductive material, heat generated from the unit batteries disposed at the center portion is transmitted to the unit batteries at the both end portions lower in temperature than those at the center portion.*

*As a result, temperature is quickly made uniform among the unit batteries regardless of the position in the battery pack, whereby a battery pack whose output characteristics are less subject to ambient temperature can be provided.*

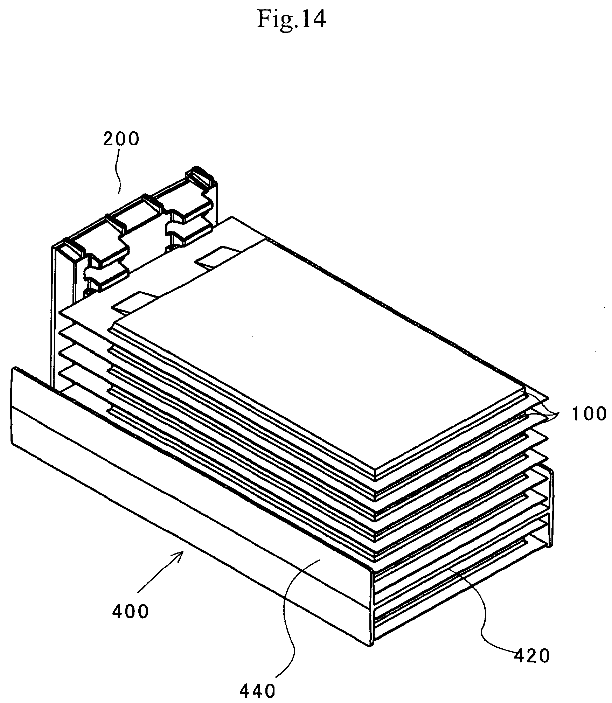

*FIG. 14* *shows the situation where the third to eighth unit batteries 100 are sequentially attached to the holder member 200 and the board 300 in a similar way to that described above. On the board 300, each time one unit battery 100 is attached, the pull-out tabs are bent and put on each other, and the pull-out tabs of the adjacent unit batteries 100 are connected by means of the pull-out tab connection bolts 257. In this manner, an electrical connection is realized.*

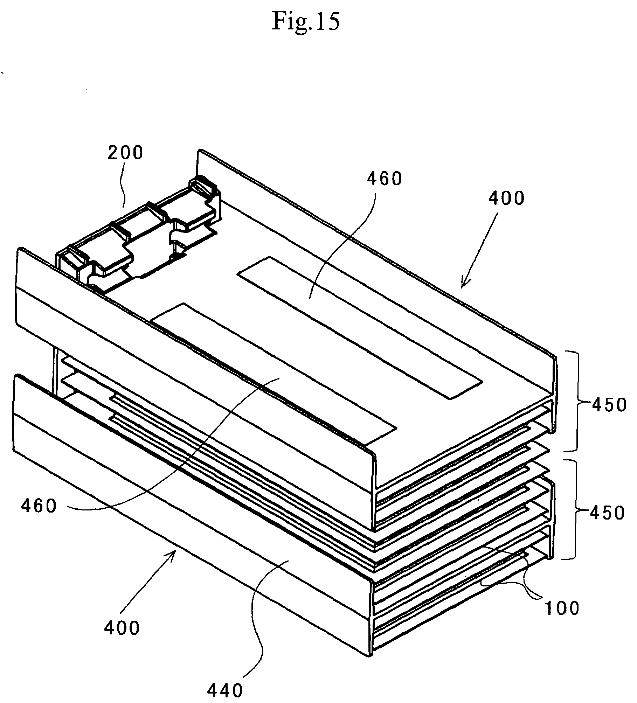

*In a subsequent process shown in* *FIG. 15**, what is shown is the situation where, after the eighth unit battery 100 is attached, still another battery protective member 400 is attached. In this manner, in the battery connecting structure 500 of the present embodiment, two battery protective members 400 are disposed so as to form two battery protecti ve member blocks 450, which are protected by the battery protective members. In this manner, each unit battery 100 is protected against external shocks and the like.*

*Moreover, the unit batteries 100 are so placed as to rise above an upper end portion of a direction of the height between the first plate section 420 and the second plate section 440. In this manner, since the unit batteries are so placed as to rise above the upper end portion of the second plate section 440, there is an improvement in heat-release performance from the peripheries of the unit batteries.*

*Batteries that are placed so as to rise above the upper end portion of the above second plate section may be placed on an upper or lower battery protective member 400, or both, in the case of the diagram.*

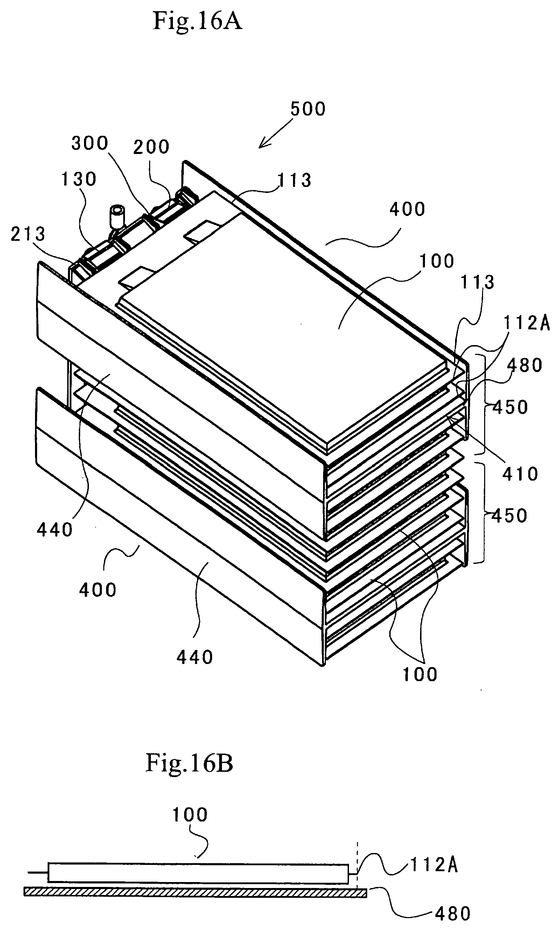

*FIG. 16* *shows the situation where, on the first plate section 420 of the battery protective member 400, the ninth and tenth unit batteries 100 are further attached to the holder member 200 and the board 300.*

*The negati ve-electrode pull-out tab 130 of the tenth unit battery 100 is fixed to a thin-film electrode section (not shown) of the board 300 with the use of the pull-out tab guidance section 213. As a result, the pull-out tabs of the first to tenth unit batteries 100 are each connected on the board 300, and a process of connecting ten unit batteries 100 in series is completed. In this manner, the battery connecting structure 500 including two battery protective member blocks 450 is completed.*

*In the battery pack of the present invention, a vertical projection plane of an outer edge 112A of the lower end portion 112 of the unit battery 100 to the first plate section 410 is positioned closer to the center than a first plate section outer edge 480 is. Therefore, even when a large shock is given to the battery pack, the outer edge 480 of the first plate section of the battery pack prevents the shocks from being delivered directly to the unit battery 100. Therefore, it is definitely possible to protect the unit battery.*

*Moreover, in the battery connecting structure 500 shown in the diagram, the unit batteries 100 are so placed as to rise above the upper end portion of the direction of the height from a surface of the first plate section 420 of the second plate section 440 of a side of a battery protective member. The sides of some of the unit batteries are not covered with the second plate section 440.*

*Therefore, the air in the surrounding area flows into the placed unit batteries 100 from a space between the second plate sections 440 of the upper and lower battery protective members 400, contributing to an improvement in heat-release performance of the unit batteries 100.*

*A unit battery 100 covered with a film casing material has a heat-sealing section on the periphery. A side edge portion 113 is not bent; the side edge portion 113 is so large in size that the side edge portion 113 comes in contact with an inner surface of the second plate section 440 of the battery protective member 400. Therefore, the unit battery 100 can be precisely positioned on the battery protective member 400 and smoothly placed on the first plate section.*

*The film casing material is flexible. However, on the heat-sealing section, there is a portion that is higher in rigidity than other portions. Therefore, the heat-sealing section can sufficiently resist a force applied from the side edge portion 113, and therefore can withstand vibrations, shocks and other forces.*

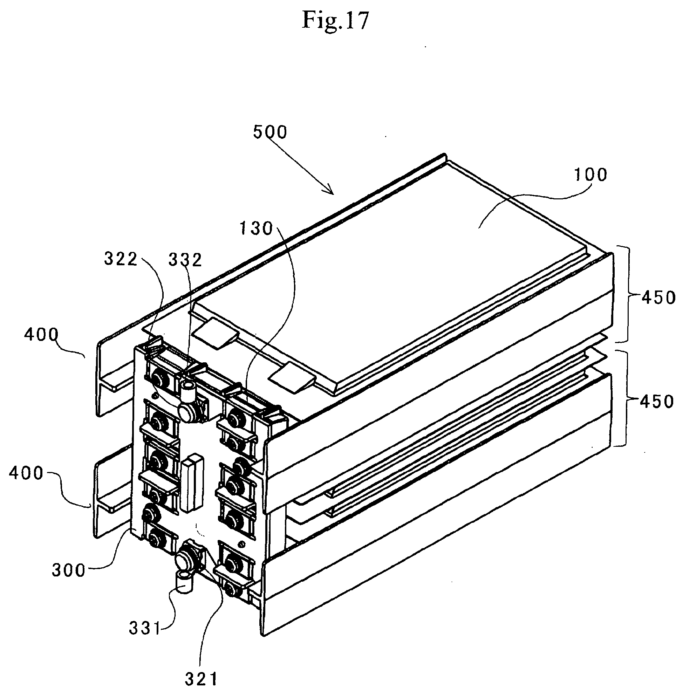

*FIG. 17* *is a diagram showing the battery connecting structure shown in* *FIG. 16* *when seen from the board.*

*The battery connecting structure includes two battery protective member blocks 450. A process of charging and discharging ten unit batteries 100 connected in series takes place with the use of the positive terminal electrode washer 321 and negative terminal electrode washer 322 attached to the board 300. A terminal member 331 is attached to the positive terminal electrode washer 321, and a terminal member 332 to the negative terminal electrode washer 322.*

*As described above, the battery pack of the present invention is made in the following manner: the positive and negative pull-out tabs of a plurality of unit batteries 100 are inserted into the pull-out tab insertion holes 215 of the holder member 200, and the pull-out tabs having different polarities of a plurality of the unit batteries 100 are connected together on the board 300. Therefore, the production of battery packs is highly efficient, resulting in an improvement in productivity.*

*Moreover, the pull-out tabs having different polarities of a plurality of the unit batteries 100 are connected together on the board 300 with pull-out tab connection bolts 257 and nuts 256. Therefore, it is easy to connect a plurality of unit batteries 100 electrically. Thus, the production of battery packs is highly efficient, resulting in an improvement in productivity.*

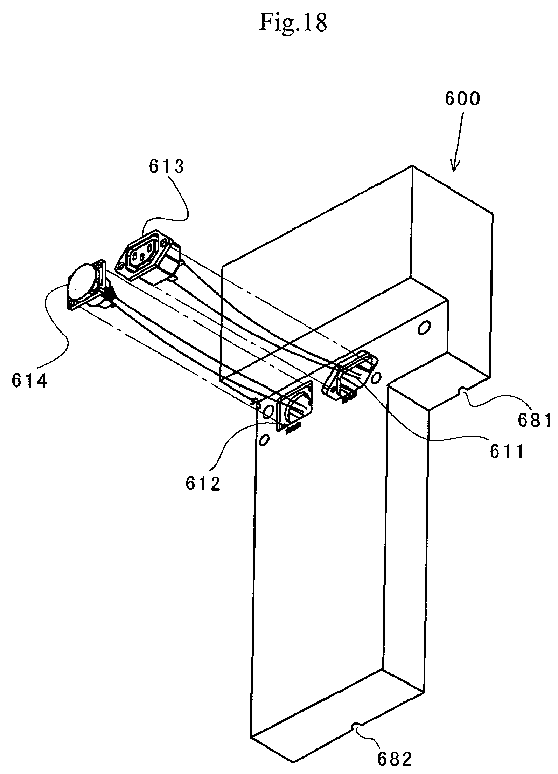

*The following describes processes of making a battery pack of the present invention using the battery connecting structure 500, which is formed as described above, with reference to* *FIGS. 18 to 25**.*

*In a process shown in* *FIG. 18**, to a first case body 600 that houses the battery connecting structure 500, a discharge terminal 613 and a charge terminal 614 are fixed with screws with the help of a discharge terminal attachment concave section 611 and a charge terminal attachment concave section 612, which are provided on the first case body 600.*

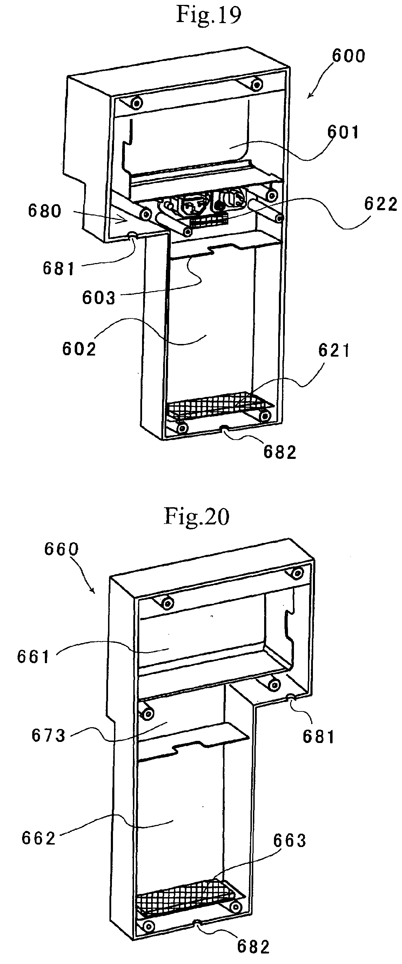

*In a process shown in* *FIG. 19**, a first cushioning member 621 is attached to a second housing section 602 of the first case body 600 with an adhesive or the like, and a second cushioning member 622 to a circuit housing section 603.*

*In a process shown in* *FIG. 20**, to a second housing section 662 of a second case body 660, a third cushioning member 663 is attached with an adhesive or the like.*

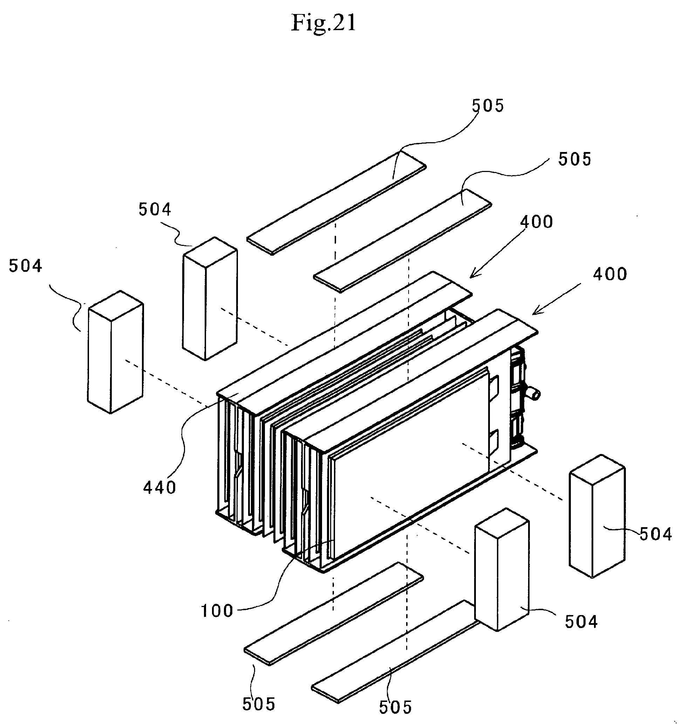

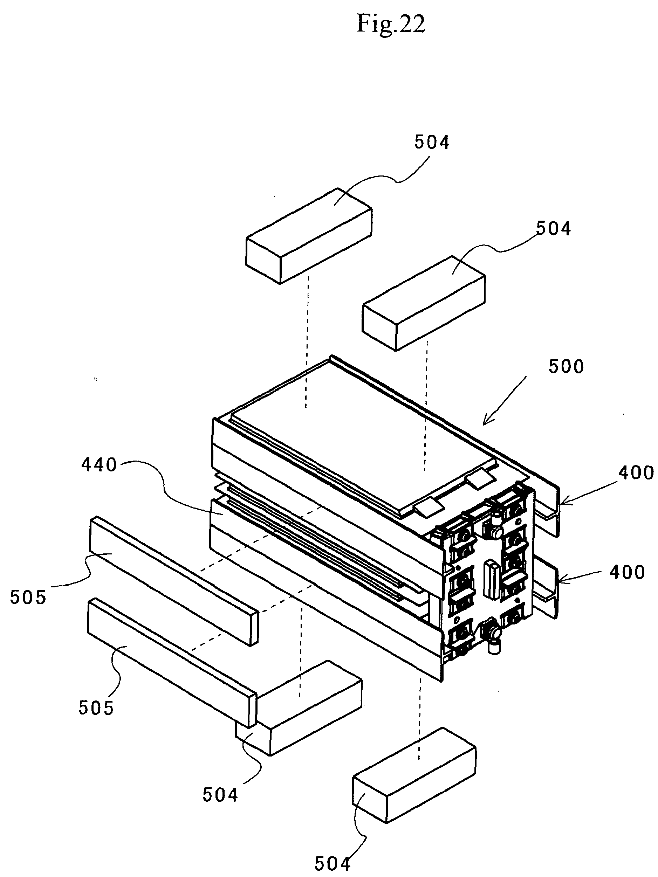

*In processes shown in* *FIGS. 21* *and* *22**, to the battery connecting structure 500, cushioning materials are attached. In the battery pack of the present invention, two structures, i.e. a first battery connecting structure 500 and a second battery connecting structure 500, are stored in the battery pack.*

*In a process shown in* *FIG. 21**, as for the first battery connecting structure 500, fourth cushioning members 504, which are thick, are attached to an edge-portion unit battery 100; to the second plate sections of all the battery protective members, fifth cushioning members 505, which are thinner than the fourth cushioning members 504, are attached. An adhesive or the like is used in attaching the fourth cushioning members 504 and the fifth cushioning members 505 to parts.*

*Meanwhile, in a process shown in* *FIG. 22**, as for the second battery connecting structure 500, fourth cushioning members 504 are attached to an edge-portion unit battery 100; only to the second plate sections of a one-side battery protective member, fifth cushioning members 505 are attached. As in the case described above, an adhesive or the like is used in attaching the fourth cushioning members 504 and the fifth cushioning members 505 to parts.*

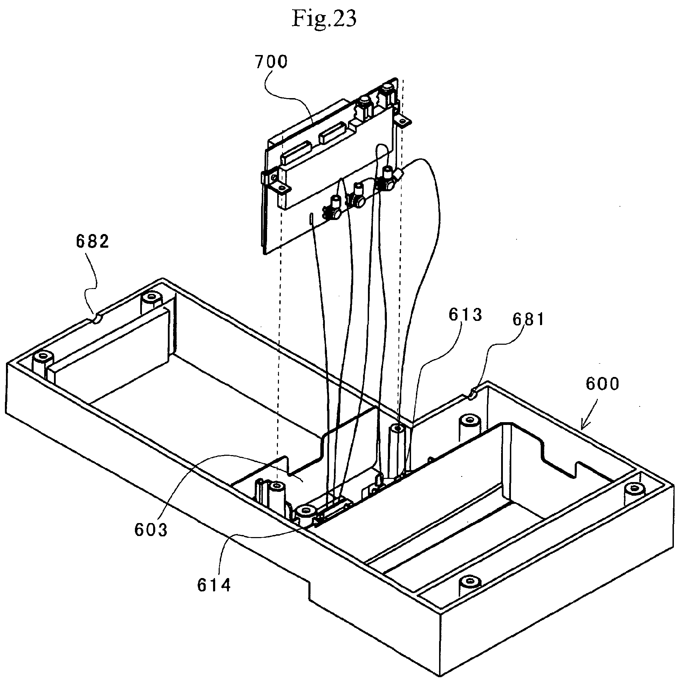

*In a process shown in* *FIG. 23**, a discharge terminal 613, a charge terminal 614 and a protective circuit board 700 are connected with wires. Moreover, the protective circuit board 700 is fixed to the circuit housing section 603 of the first case body 600 with screws.*

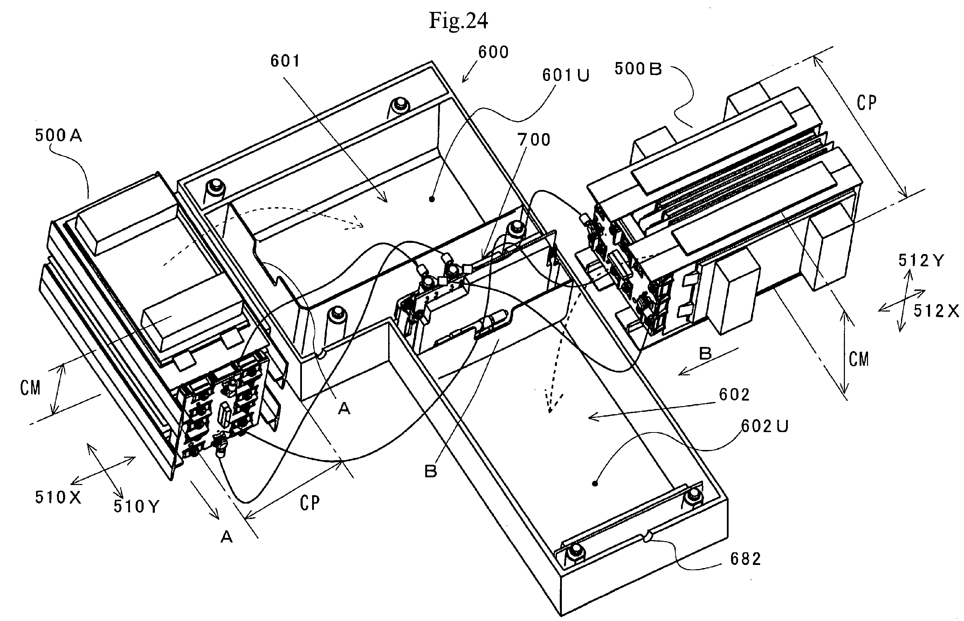

*In a process shown in* *FIG. 24**, the first battery connecting structure 500A and the second battery connecting structure 500B are connected to the protective circuit board 700 with wires. Moreover, the first battery connecting structure 500A is stored in the first housing section 601 of the first case body 600, and the second battery connecting structure 500B in the second housing section 602.*

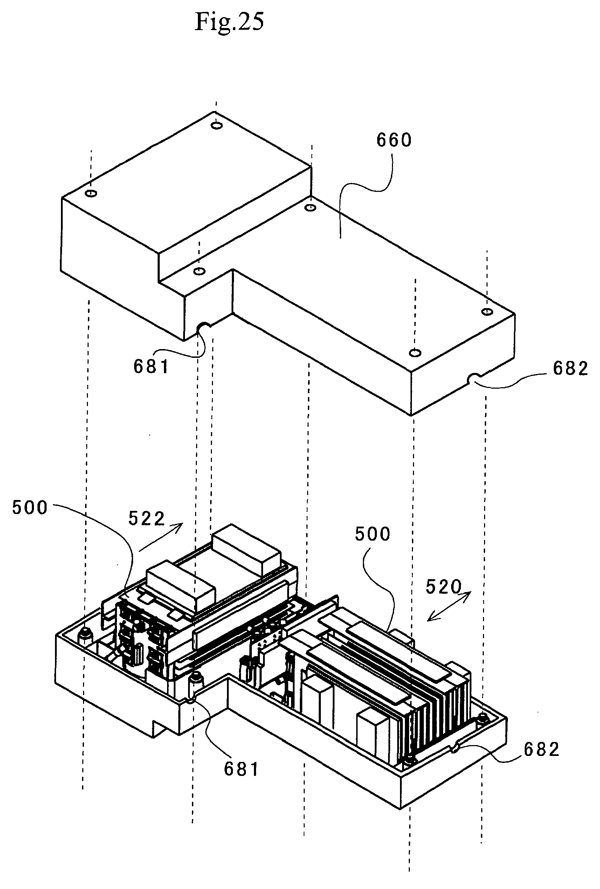

*In a process shown in* *FIG. 25**, the first case body 600 is fixed to the second case body 660 with screws. As a result, the battery pack of the present invention is completed.*

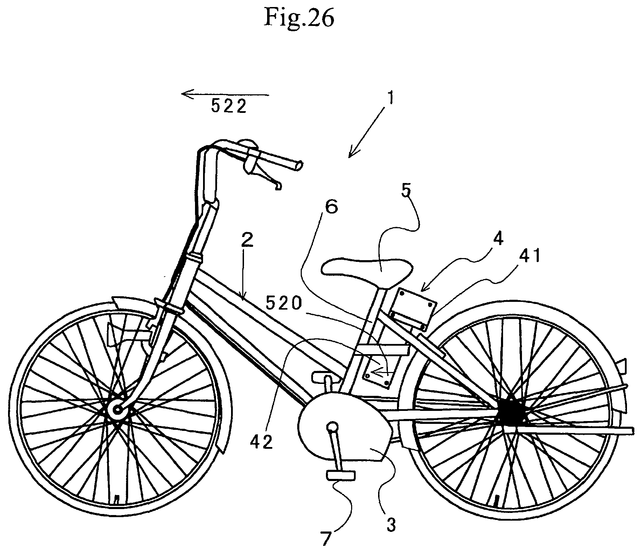

*FIG. 26* *is a diagram illustrating an electric bicycle on which the battery pack of the present invention is mounted.*

*An electric bicycle 1 has a frame 2 on which a battery pack 4 of the present invention is mounted. The battery pack 4 supplies power to a driving mechanism 3 of the electric bicycle.*

*The battery pack 4 of the present invention is mounted directly on the frame 2 that is subject to vibrations and shocks from a road surface. However, in the battery pack 4, measures have been taken against vibrations and shocks. Therefore, the battery pack 4 operates in a stable manner.*

### Industrial Applicability

*In the battery pack of the present invention, the flat film-covered battery is mounted to the battery protective member, so that it is possible to obtain excellent vibration, impact-resistant characteristics and to make the temperature uniform among the placed batteries. Further, the vertical projection plane of the outer edge of the flat film-covered battery to the first plate section is positioned closer to the center than the outer edge of the first plate section is. Therefore, even when a large shock is given to the battery pack, the outer edge of the flat film-covered battery is protected by the protective member, so that it is possible to expect that the battery pack can operate in a stable manner for a long period of time without being damaged, thereby allowing stable operation for a long period time even when the battery pack is mounted on the electric bicycle. Further, in the battery pack of the present invention, measures have been taken against vibrations and shocks, as well as, the temperature can be made uniform among the placed batteries, so that when the battery pack of the invention is mounted on the electric bicycle, it is possible to make the electric bicycle operate in a stable manner even in cold climates.*

### Explanation of Symbols

*1: Electric bicycle*
*2: Frame*
*3: Driving mechanism*
*4 : Battery pack*
*100: Unit battery*
*110: Unit battery main unit*
*111: Upper end portion*
*112: Lower end portion*
*112A: Lower end portion outer edge*
*120: Positive-electrode pull-out tab*
*125: Connection tab*
*127: Hole*
*130: Negative-electrode pull-out tab*
*137: Hole*
*200: Holder member*
*203: Pull-out tab gui de rib*
*210: First surface*
*211: First row*
*212: Second row*
*213: Pull-out tab guidance section*
*214: Pull-out tab guidance concave section*
*215: Pull-out tab insertion hole*
*220: Pull-out tab guide projecting section*
*221: Top section*
*222: Tapered side*
*250: Second surface*
*255: Nut housing section*
*256 : Nut*
*257: Pull-out tab connection bolt*
*260: Divider piece*
*263: Positioning projecting section*
*270: Screw hole*
*271: Board fixing screw*
*300: Board*
*314: Pull-out tab guidance notch section*
*315: Pull-out tab extraction hole*
*316: Pull-out tab*/*divider piece extraction hole*
*317: Divider piece extraction hole*
*320a, 320b, 320c: Thin-film electrode section*
*321: Metallic positive terminal electrode washer*
*322: Metallic negative terminal electrode washer*
*325: Pull-out tab connection screw hole*
*328: Positioning hole*
*329: Board fixing screw hole*
*331, 332: Terminal member*
*340: Connector*
*400: Battery protective member*
*410: First plate section*
*420: Notch section*
*421: First notch section*
*422: Second notch section*
*423: Third notch section*
*440: Second plate section*
*450: Battery protective member block*
*460: Two-sided adhesive tape*
*480: First plate section outer edge*
*500: Battery connecting structure*
*504: Fourth cushioning member (thick)*
*505: Fifth cushioning member (thin)*
*600: First case body*
*601: First housing section*
*602: Second housing section*
*603: Circuit housing section*
*611: Discharge terminal attachment concave section*
*612: Charge terminal attachment concave section*
*613: Discharge terminal*
*614: Charge terminal*
*621: First cushioning member*
*622: Second cushioning member*
*660: Second case body*
*661: First housing section*
*662: Second housing section*
*663: Third cushioning section*
*673: Circuit housing section*
*700: Protective circuit board*

## Claims

1. A battery pack (4), comprising: a battery protective member (400) having a first plate section (410) and a second plate section (440) which is integrally connected to both edge portions of a width direction of the first plate section and extends substantially in a direction perpendicular to both surfaces of the first plate section; and
flat unit batteries (100) being so placed on the first plate section (410) as to rise above the upper end portion of the direction of the height,from a surface of the first plate section (410), of the second plate section (440) of a side of a battery protective member, wherein the sides of some of the unit batteries are not covered with the second plate section (440).

2. The battery pack (4) according to claim 1, comprising
a battery protective member block (450) having the first plate section on at least one surface of which unit batteries (100) are so placed as to rise above a height of the second plate section standing from the first plate section, wherein
a plurality of the battery protective member blocks are integrated with the unit batteries so placed thereon as to rise above the height of the second plate section facing each other.

3. The battery pack (4) according to claim 1 or 2, wherein one adhesive side of a two-sided adhesive tape is attached to the unit battery, which then adheres to the first plate section or an adjoining unit battery surface.

4. The battery pack (4) according to any one of claims 1 to 3, wherein
the unit batteries are film-covered batteries.

5. The battery pack (4) according to any one of claims 1 to 4, wherein
the unit batteries (100) an opening of each of which is sealed with a film casing material are placed on the first plate section (410), and
a vertical projection plane of an outer edge (112A) of each of the unit batteries to the first plate section is positioned closer to the center than the outer edge (480) of the first plate section is.

6. The battery pack (4) according to any one of claims 1 to 4, wherein
the unit batteries (100) are stacked on the first plate section (410).

7. The battery pack (4) according to any one of claims 1 to 5, wherein
the battery protective member (400) is made of a highly heat-conductive material.

8. The battery pack (4) according to claim 7, wherein
the highly heat-conductive material is a metallic member or a member made of synthetic resin with highly heat-conductive material particles dispersed.

9. The battery pack (4) according to any one of claims 1 to 8, wherein
a cross section of the battery protective member (400) which is on a plane perpendicular to a longer direction of the first plate section (410) has a shape of "H".

10. An electric bicycle (1) comprising the battery pack (4) as claimed in any one of claims 1 to 9.

## Patentansprüche

1. Batteriepack (4), umfassend: ein Batterieschutzelement (400) mit einem ersten Plattenabschnitt (410) und einem zweiten Plattenabschnitt (440), der integral mit beiden Randbereichen des ersten Plattenabschnitts in einer Breitenrichtung verbunden ist und sich im Wesentlichen in einer Richtung orthogonal zu beiden Oberflächen des ersten Plattenabschnitts erstreckt; und
flache Einheitsbatterien (100), die derart an dem ersten Plattenabschnitt (410) platziert sind, dass sie über den oberen Endbereich der Höhenrichtung, von einer Oberfläche des ersten Plattenabschnitts (410) aus, des zweiten Plattenabschnitts (440) einer Seite eines Batterieschutzelements hinausragen, wobei die Seiten einiger der Einheitsbatterien nicht mit dem zweiten Plattenabschnitt (440) bedeckt sind.

2. Batteriepack (4) nach Anspruch 1, umfassend
einen Batterieschutzelementblock (450) mit dem ersten Plattenabschnitt, wobei auf wenigstens einer Oberfläche desselben Einheitsbatterien (100) derart platziert sind, dass sie über eine Höhe des zweiten Plattenabschnitts aufstehend von dem ersten Plattenabschnitt ragen, wobei
eine Mehrzahl der Batterieschutzelementblöcke mit den Einheitsbatterien integriert und derart darauf platziert sind, dass sie über die Höhe des zweiten Plattenabschnitts einander gegenüberliegend ragen.

3. Batteriepack (4) nach Anspruch 1 oder 2, wobei eine haftende Seite eines zweiseitigen Haftbands an der Einheitsbatterie angebracht ist, welche dann an dem ersten Plattenabschnitt oder einer angrenzenden Einheitsbatterieoberfläche anhaftet.

4. Batteriepack (4) nach einem der Ansprüche 1 bis 3, wobei
die Einheitsbatterien filmbeschichtete Batterien sind.

5. Batteriepack (4) nach einem der Ansprüche 1 bis 4, wobei
die Einheitsbatterien (100), bei jeder von denen eine Öffnung mit einem Filmgehäusematerial versiegelt ist, auf dem ersten Plattenabschnitt (410) platziert sind, und
eine vertikale Vorsprungebene eines äußeren Rands (112A) jeder der Einheitsbatterien hin zu dem ersten Plattenabschnitt näher am Zentrum positioniert ist als der äußere Rand (480) des ersten Plattenabschnitts.

6. Batteriepack (4) nach einem der Ansprüche 1 bis 4, wobei
die Einheitsbatterien (100) auf dem ersten Plattenabschnitt (410) gestapelt sind.

7. Batteriepack (4) nach einem der Ansprüche 1 bis 5, wobei
das Batteriescizutzelement (400) aus einem hochwärmeleitenden Material hergestellt ist.

8. Batteriepack (4) nach Anspruch 7, wobei
das hochwärmeleitende Material ein Metallelement oder ein Element ist, das aus synthetischem Harz mit dispergierten Partikeln aus hochwärmeleitendem Material hergestellt ist.

9. Batteriepack (4) nach einem der Ansprüche 1 bis 8, wobei
ein Querschnitt des Batterieschutzelements (400) in einer Ebene orthogonal zu einer längeren Richtung des ersten Plattenabschnitts (410) eine "H"-Gestalt aufweist.

10. Elektrisches Fahrrad (1), umfassend den Batteriepack (4) nach einem der Ansprüche 1 bis 9.

## Revendications

1. Bloc-batterie (4), comprenant : un organe de protection de batterie (400) ayant une première section de plaque (410) et une seconde section de plaque (440) qui est raccordée de façon solidaire aux deux portions de bord d'une direction de la largeur de la première section de plaque et s'étend sensiblement dans une direction perpendiculaire aux deux surfaces de la première section de plaque ; et
des batteries unitaires plates (100) étant placées sur la première section de plaque (410) de façon à s'élever au-dessus de la portion d'extrémité supérieure de la direction de la hauteur, à partir d'une surface de la première section de plaque (410), de la seconde section de plaque (440) d'un côté d'un organe de protection de batterie, dans lequel les côtés de certaines des batteries unitaires ne sont pas couverts par la seconde section de plaque (440).

2. Bloc-batterie (4) selon la revendication 1, comprenant
un bloc d'organe de protection de batterie (450) ayant la première section de plaque sur au moins une surface de laquelle des batteries unitaires (100) sont placées de façon à s'élever au-dessus d'une hauteur de la seconde section de plaque se dressant depuis la première section de plaque, dans lequel
une pluralité des blocs d'organe de protection de batterie est intégrée aux batteries unitaires placées dessus de façon à s'élever au-dessus de la hauteur de la seconde section de plaque en regard les uns des autres.

3. Bloc-batterie (4) selon la revendication 1 ou 2, dans lequel un côté adhésif d'une bande adhésive à deux côtés est fixé à la batterie unitaire, qui adhère ensuite à la première section de plaque ou à une surface de batterie unitaire adjacente.

4. Bloc-batterie (4) selon l'une quelconque des revendications 1 à 3, dans lequel
les batteries unitaires sont des batteries recouvertes d'un film.

5. Bloc-batterie (4) selon l'une quelconque des revendications 1 à 4, dans lequel
les batteries unitaires (100), dont une ouverture de chacune est scellée avec un matériau de boîtier pelliculaire, sont placées sur la première section de plaque (410), et
un plan de projection vertical d'un bord externe (112A) de chacune des batteries unitaires jusqu'à la première section de plaque est positionné plus proche du centre que ne l'est le bord externe (480) de la première section de plaque.

6. Bloc-batterie (4) selon l'une quelconque des revendications 1 à 4, dans lequel
les batteries unitaires (100) sont empilées sur la première section de plaque (410).

7. Bloc-batterie (4) selon l'une quelconque des revendications 1 à 5, dans lequel
l'organe de protection de batterie (400) est constitué d'un matériau hautement thermoconducteur.

8. Bloc-batterie (4) selon la revendication 7, dans lequel
le matériau hautement thermoconducteur est un organe métallique ou un organe constitué de résine synthétique ayant des particules de matériau hautement thermoconducteur dispersées.

9. Bloc-batterie (4) selon l'une quelconque des revendications 1 à 8, dans lequel
une section de l'organe de protection de batterie (400) qui est sur un plan perpendiculaire à la direction plus longue de la première section de plaque (410) a une forme de « H ».

10. Vélo électrique (1) comprenant le bloc-batterie (4) tel que revendiqué dans l'une quelconque des revendications 1 à 9.
